# EUROPEAN PATENT APPLICATION

(11) **EP 4 541 642 A1**
(43) Date of publication of application: **23.04.2025**
(21) Application number: 23870083.5
(22) Date of filing: 25.08.2023
(51) Int. Cl.: B60L 53/66

(54) **VEHICLE ENERGY SUPPLEMENTATION CONTROL METHOD, COMPUTER DEVICE, STORAGE MEDIUM, AND VEHICLE**

(30) Priority: 28.09.2022 CN 202211193769
(71) Applicant: Anhui NIO Autonomous Driving Technology Co., Ltd., Hefei, Anhui 230601 (CN)
(72) Inventor: ZHU, Houqiang, Shanghai 201804 (CN); CHEN, Xiaodong, Shanghai 201804 (CN); FAN, Haoyang, Shanghai 201804 (CN)
(74) Representative: Vossius & Partner Patentanwälte Rechtsanwälte mbB
(86) International application number: PCT/CN2023/114835
(87) International publication number: WO 2024/066840

(57) **Abstract**

The invention relates to the technical field of autonomous driving, and specifically provides a vehicle energy replenishment control method, a computer device, a computer-readable storage medium and a vehicle, with a view to solve the problem of how to replenish energy to the vehicle more conveniently and intelligently. The invention provides a method including: in the process of controlling a vehicle to autonomously drive towards a navigation destination on a driving road, in response to a received vehicle energy replenishment instruction, controlling the vehicle to drive to a vehicle energy replenishment facility located in a road service area of the driving road for automatic energy replenishment, and controlling the vehicle, after completing energy replenishment, to return to the driving road and continue autonomously driving towards the navigation destination. The method achieves autonomous driving of a vehicle in the whole process of driving into a road service area from a driving road, being replenished with energy in the road service area, and driving back to the driving road from the road service area after energy replenishment is completed, and no driver takeover is needed, which significantly improves the intelligence of the vehicle autonomous driving technologies and the driver's driving experience.

## Description

The invention claims the priority to Chinese Patent Application CN 115675163 A, filed on September 28, 2022, and entitled "VEHICLE ENERGY REPLENISHMENT CONTROL METHOD, COMPUTER DEVICE, STORAGE MEDIUM, AND VEHICLE", which is incorporated herein by reference in its entirety.

### TECHNICAL FIELD

The invention relates to the technical field of autonomous driving, and specifically provides a vehicle energy replenishment control method, a computer device, a computer-readable storage medium, and a vehicle.

### BACKGROUND ART

When a vehicle drives on an expressway for a long period of time or over a long distance, it often needs to go to an expressway service area to be replenished with energy. For example, for a vehicle using electric energy as a power source, it often needs to go to a service area for charging (directly charging a power battery on the vehicle) or battery swapping (swapping a depleted power battery on the vehicle with one that is fully charged). The current autonomous driving technologies have already realized long-time or long-distance navigation assisted driving control over the vehicle on the expressway, which greatly reduces the driving pressure of a driver. However, after the vehicle enters the expressway service area, it is not possible to continue the navigation assisted driving control over the vehicle, and there is a need for the driver to take over the vehicle and manually drive the vehicle to a vehicle energy replenishment facility for energy replenishment, which reduces the intelligence of the autonomous driving technologies and the driver's driving experience.

Accordingly, there is a need in the art for a new technical solution to solve the problem described above.

### SUMMARY

To overcome the above disadvantages, the invention is proposed to provide a vehicle energy replenishment control method, a computer device, a computer-readable storage medium and a vehicle that solve or at least partially solve the technical problem of how to replenish energy to the vehicle more conveniently and intelligently to improve the energy replenishment experience and the driving experience of the vehicle.

In a first aspect, provided is a vehicle energy replenishment control method, the method including:
in the process of controlling a vehicle to autonomously driving to a navigation destination on a driving road, in response to a received vehicle energy replenishment instruction, controlling the vehicle to drive to a vehicle energy replenishment facility located in a road service area of the driving road;
controlling the vehicle to send an energy replenishment request to the vehicle energy replenishment facility to enable the vehicle energy replenishment facility to automatically replenish energy to the vehicle based on the energy replenishment request; and
controlling the vehicle, after completing energy replenishment, to return to the driving road and continue autonomously driving towards the navigation destination.

In a technical solution of the vehicle energy replenishment control method described above, the step of "controlling the vehicle to drive to a vehicle energy replenishment facility located in a road service area of the driving road" specifically includes:
controlling the vehicle to drive to the road service area and sending a query request for energy replenishment queuing information to the vehicle energy replenishment facility to obtain the energy replenishment queuing information of the vehicle energy replenishment facility;
determining whether queuing up for energy replenishment is needed or not based on the energy replenishment queuing information;
controlling the vehicle to drive to the vehicle energy replenishment facility based on a determination result;
and/or, the drive road being an expressway, and the vehicle energy replenishment facility including a vehicle battery swap station.

In a technical solution of the vehicle energy replenishment control method described above, the step of "controlling the vehicle to drive to the vehicle energy replenishment facility based on a determination result" specifically includes:
if there is no need to queue up for energy replenishment, directly controlling the vehicle to drive to the vehicle energy replenishment facility; and
if there is a need to queue up for energy replenishment, controlling the vehicle to drive to a preset parking waiting area within the road service area to park to queue up for energy replenishment, and then controlling the vehicle to drive to the vehicle energy replenishment facility after a queue number arrival notification from the vehicle energy replenishment facility is received.

In a technical solution of the vehicle energy replenishment control method described above, the step of "controlling the vehicle to drive to a vehicle energy replenishment facility located in a road service area of the driving road" further includes:
controlling the vehicle to drive to the road service area by using a preset autonomous driving cruise mode for the driving road and based on a preset navigation map of the driving road; and
controlling the vehicle, after entering the road service area, to drive to the vehicle energy replenishment facility by using a preset autonomous driving cruise mode for the road service area and based on a preset navigation map of the road service area.

In a technical solution of the vehicle energy replenishment control method described above, the step of "controlling the vehicle, after entering the road service area, to drive to the vehicle energy replenishment facility by using a preset autonomous driving cruise mode for the road service area and based on a preset navigation map of the road service area" specifically includes:
determining whether other traffic participants coming from different directions are detected in the process of controlling the vehicle to drive to the vehicle energy replenishment facility; if detected, then controlling the vehicle to yield to the other traffic participants;
and/or, identifying the area type of each of road areas through which the vehicle drives in the process of controlling the vehicle to drive to the vehicle energy replenishment facility;
determining a maximum speed corresponding to each of the road areas respectively based on the area type of each of the road areas; and
controlling the vehicle to drive through each of the road areas based on the maximum speed corresponding to each of the road areas.

In a technical solution of the vehicle energy replenishment control method described above, before the step of "controlling the vehicle to drive to a vehicle energy replenishment facility located in a road service area of the driving road", the method further includes:
detecting whether state information of the vehicle and state information of the vehicle energy replenishment facility meet startup conditions for vehicle energy replenishment;
if so, then continuing to perform the step of "controlling the vehicle to drive to a vehicle energy replenishment facility located in a road service area of the driving road";
if not, then stopping performing the step of "controlling the vehicle to drive to a vehicle energy replenishment facility located in a road service area of the driving road", and controlling the vehicle to continue autonomously driving to the navigation destination on the driving road;
and/or, the method further includes:
   in the process of performing energy replenishment control over the vehicle, in response to a received energy replenishment stop instruction, stopping the energy replenishment control over the vehicle and controlling the vehicle to continue autonomously driving to the navigation destination on the driving road;
   where the vehicle energy replenishment stop instruction is an instruction entered by a user through a human-computer interaction device of the vehicle or an instruction generated after an abnormality in the state information of the vehicle is detected.

In a technical solution of the vehicle energy replenishment control method described above, after the step of "stopping the energy replenishment control over the vehicle and controlling the vehicle to continue autonomously driving to the navigation destination on the drive road", the method further includes:
detecting, in response to a received energy replenishment restore instruction, whether the state information of the vehicle and the state information of the vehicle energy replenishment facility meet the startup conditions for vehicle energy replenishment and whether the vehicle is on a navigation path towards or away from the road service area;
restoring the energy replenishment control over the vehicle if the startup conditions are met and the vehicle is on the navigation path towards or away from the road service area;
otherwise, still stopping the energy replenishment control over the vehicle and controlling the vehicle to continue autonomously driving to the navigation destination on the driving road.

According to a second aspect, a computer device is provided. The computer device includes at least one processor and a storage apparatus configured to store a plurality of program codes, and the program codes are adapted to be loaded and executed by the at least one processor to perform the vehicle energy replenishment control method in any one of the above technical solutions of the vehicle energy replenishment control method.

According to a third aspect, a computer-readable storage medium is provided. The computer-readable storage medium has a plurality of program codes stored therein, and the program codes are adapted to be loaded and executed by at least one processor to perform the vehicle energy replenishment control method in any one of the above technical solutions of the vehicle energy replenishment control method.

According to a fourth aspect, a vehicle is provided, the vehicle including a computer device described in the above technical solution of the computer device.

The one or more technical solutions of the invention described above have at least one or more of the following beneficial effects:
an implementation of the technical solutions of the invention may include: in the process of controlling a vehicle to autonomously drive to a navigation destination on a driving road, in response to a received vehicle energy replenishment instruction, controlling the vehicle to drive to a vehicle energy replenishment facility located in a road service area of the driving road, then controlling the vehicle to send an energy replenishment request to the vehicle energy replenishment facility to enable the vehicle energy replenishment facility to replenish energy to the vehicle automatically, and finally controlling the vehicle, after completing energy replenishment, to return to the driving road and continue autonomously driving to the navigation destination. The above implementation achieves autonomous driving (automated operation) of the vehicle in the whole process of driving into the road service area from the driving road, being replenished with energy in the road service area, and driving back to the driving road from the road service area after energy replenishment is completed, and no driver takeover is needed, which significantly improves the intelligence of the vehicle autonomous driving technologies and the driver's driving experience.

Furthermore, an implementation of some technical solutions of the invention may include, in the process of controlling the vehicle to drive to the vehicle energy replenishment facility located in the road service area of the driving road, controlling the vehicle to drive to the road service area and sending a query request for energy replenishment queuing information to the vehicle energy replenishment facility to obtain the energy replenishment queuing information of the vehicle energy replenishment facility, then determining whether queuing up for energy replenishment is needed or not based on the energy replenishment queuing information, and finally controlling the vehicle to drive to the vehicle energy replenishment facility based on a determination result. By the above implementation, autonomous queuing for vehicle energy replenishment is realized, which further improves the intelligence of the vehicle autonomous driving technologies and the driver's driving experience.

### BRIEF DESCRIPTION OF THE DRAWINGS

The disclosed content of the invention will become more readily understood with reference to the accompanying drawings. Those skilled in the art readily understand that these accompanying drawings are merely for illustrative purposes and are not intended to limit the scope of protection of the invention. In the drawings:
FIG. 1 is a schematic flowchart of main steps of a vehicle energy replenishment control method according to an embodiment of the invention;
FIG. 2 is a schematic flowchart of main steps of a method of controlling a vehicle to drive to a vehicle energy replenishment facility located in a road service area of a driving road, according to an embodiment of the invention; and
FIG. 3 is a schematic diagram of an application scenario of a vehicle energy replenishment control method according to an embodiment of the invention.

### DETAILED DESCRIPTION OF EMBODIMENTS

Some implementations of the invention are described below with reference to the accompanying drawings. Those skilled in the art should understand that these implementations are merely used to explain the technical principles of the invention, and are not intended to limit the scope of protection of the invention.

In the description of the invention, "processor" may include hardware, software or a combination of both. The processor may be a central processing unit, a microprocessor, a graphics processing unit, a digital signal processor, or any other suitable processor. The processor has a data and/or signal processing function. The processor may be implemented in software, hardware, or a combination thereof. A computer-readable storage medium includes any suitable medium that can store program code, such as a magnetic disk, a hard disk, an optical disc, a flash memory, a read-only memory, or a random access memory. The term "A and/or B" indicates all possible combinations of A and B, for example, only A, only B, or A and B.

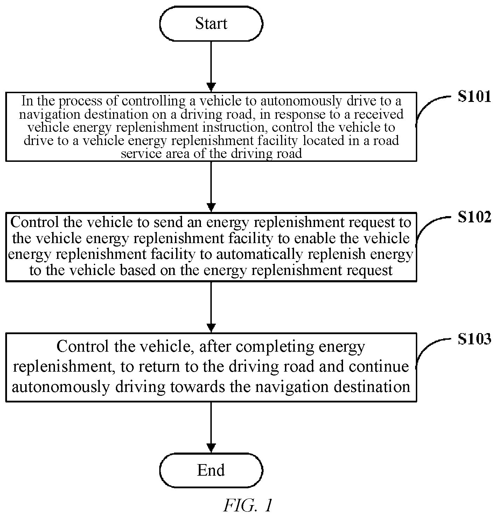

Referring to FIG. 1. FIG. 1 is a schematic flowchart of main steps of a vehicle energy replenishment control method according to an embodiment of the invention. As shown in FIG. 1, the vehicle energy replenishment control method in this embodiment of the invention mainly includes steps S101 to S103 below.

Step S101: In the process of controlling a vehicle to autonomously drive to a navigation destination on a driving road, in response to a received vehicle energy replenishment instruction, control the vehicle to drive to a vehicle energy replenishment facility located in a road service area of the driving road.

The road service area is a place along the driving road that is used to provide vehicle users with services such as rest and maintenance of vehicles. There is a connecting path between the driving road and the road service area, through which the vehicle may be driven from the driving road to the road service area, or from the road service area to the driving road. In some preferred implementations, the driving road may be an expressway. That is, the vehicle speed is greater than a set value of the drive road, for example, the expressway may be a highway or a city expressway.

The vehicle energy replenishment facility is a facility that replenishes energy to the vehicle. Taking an electric vehicle as an example, the vehicle energy replenishment facility may be a vehicle battery swap facility (e.g., vehicle battery swap station) or a vehicle charging facility (e.g., wireless vehicle charging facility).

The vehicle energy replenishment instruction may contain the type of vehicle energy replenishment facility that the vehicle intends to use (e.g., vehicle battery swap facility or rechargeable vehicle charging facility). After the vehicle energy replenishment instruction is received, a road service area where the corresponding type of vehicle energy replenishment facility is located may be determined first, and then the vehicle may be controlled to plan a navigation path from the current location to the road service area, drive to the road service area in accordance with the navigation path and continue to drive to the vehicle energy replenishment facility in the road service area.

In addition, the vehicle energy replenishment instruction may also contain a road service area where the vehicle energy replenishment facility that the vehicle intends to use is located. Here, after receiving the vehicle energy replenishment instruction, the vehicle may be directly controlled to plan a navigation path from the current location to the road service area, and then may be controlled to drive to the road service area in accordance with the navigation path and continue to drive to the vehicle energy replenishment facility in the road service area.

Step S102: Control the vehicle to send an energy replenishment request to the vehicle energy replenishment facility to enable the vehicle energy replenishment facility to automatically replenish energy to the vehicle based on the energy replenishment request.

The vehicle energy replenishment facility in this embodiment of the invention is a facility capable of automatically replenishing energy to the vehicle, i.e., it does not involve human intervention. When the vehicle parks in a designated energy replenishment parking space and the energy replenishment request is sent to the vehicle energy replenishment facility, the vehicle energy replenishment facility may automatically replenish energy to the vehicle based on the energy replenishment request.

For example, if the vehicle energy replenishment facility is a vehicle battery swap facility (e.g., vehicle battery swap station), the vehicle may autonomously park in a battery swap parking space in the vehicle battery swap facility and send a battery swap request to the vehicle battery swap facility, and the vehicle battery swap facility may automatically perform a battery swap on the vehicle after receiving the battery swap request. If the vehicle energy replenishment facility is a wireless vehicle charging facility, the vehicle may autonomously park in a charging space that supports wireless charging and send a wireless charging request to the wireless vehicle charging facility, and the wireless vehicle charging facility may automatically charge the vehicle wirelessly after receiving the wireless charging request.

Step S103: Control the vehicle, after completing energy replenishment, to return to the driving road and continue autonomously driving to the navigation destination.

The vehicle energy replenishment facility may send energy replenishment completion information to the vehicle after the energy replenishment to the vehicle is completed. After receiving the energy replenishment completion information, the vehicle may be first controlled to drive from an energy replenishment parking space of the vehicle energy replenishment facility, and plan a navigation path from the current location to the navigation destination, and then may be controlled to return to the driving road from the road service area in accordance with the navigation path and continue to drive on the driving road to the navigation destination.

It should be noted that those skilled in the art may use a conventional path planning method, autonomous driving control method, and parking method in the technical field of vehicle autonomous driving to carry out path planning, autonomous driving control, and parking control of the vehicle, respectively, and embodiments of the invention do not make specific limitations on the path planning method, autonomous driving control method, and parking method described above.

The method described above in steps S101 to S103 achieves autonomous driving (automated operation) of the vehicle in the whole process of driving into the road service area from the driving road, being replenished with energy in the road service area, and driving back to the driving road from the road service area after the energy replenishment is completed, and no driver takeover is needed, which significantly improves the intelligence of the vehicle autonomous driving technologies and the driver's driving experience.

The following further describes the method of controlling the vehicle to drive to a vehicle energy replenishment facility located in a road service area of the driving road in step S101 above.

In practical applications, queuing up for energy replenishment often occurs when a plurality of vehicles drive simultaneously to the same vehicle energy replenishment facility for energy replenishment. In this case, in order to further improve the convenience and intelligence of vehicle energy replenishment, the vehicle may be first controlled to determine whether queuing up for energy replenishment is needed or not when it is controlled to drive to the road service area of the driving road, and then whether to queue up for energy replenishment or drive directly to the vehicle energy replenishment facility for automatic energy replenishment is selected based on the determination result.

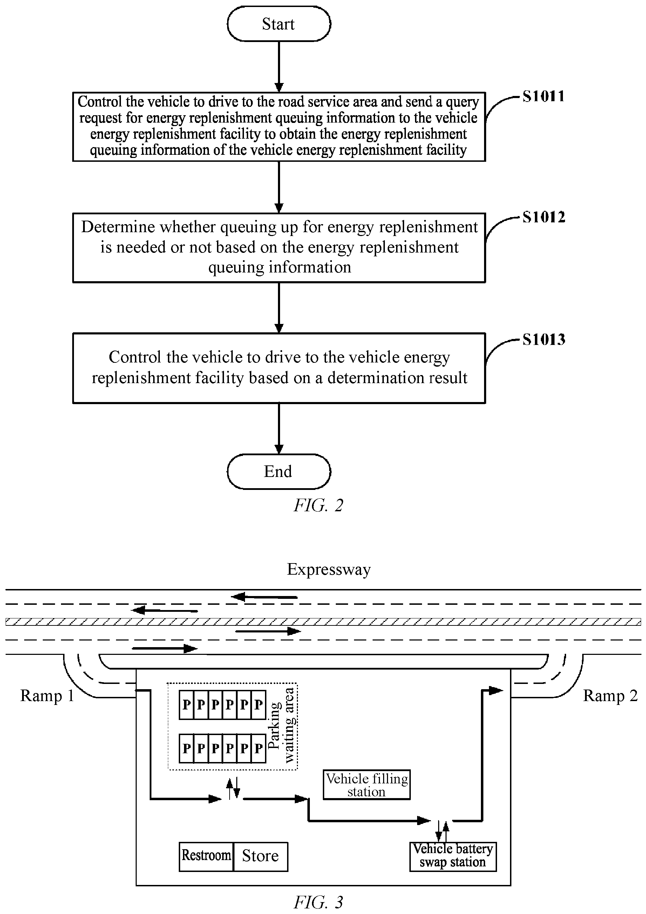

Specifically, referring to FIG. 2, in some implementations of step S 101 described above, the vehicle may be controlled to drive to the vehicle energy replenishment facility in the road service area of the driving road by performing steps S1011 to S1013 below.

Step S1011: Control the vehicle to drive to the road service area and send a query request for energy replenishment queuing information to the vehicle energy replenishment facility to obtain the energy replenishment queuing information of the vehicle energy replenishment facility.

The energy replenishment queuing information refers to the queuing information of the vehicle that makes a reservation for energy replenishment by the vehicle energy replenishment facility. Before the vehicle is controlled to drive to the road service area or when it has already driven to the road service area, the vehicle may be controlled to send a reservation request for an energy replenishment service to the vehicle energy replenishment facility so as to make a reservation for energy replenishment by the vehicle energy replenishment facility. After receiving the reservation request, the vehicle energy replenishment facility determines the queuing number for the current vehicle and updates the energy replenishment queuing information.

In order to simplify the control process and improve the convenience of control operations, the query request for the energy replenishment queuing information may serve as the reservation request for the energy replenishment service. That is, by sending to the vehicle energy replenishment facility the query request for energy replenishment queuing information, it is possible to make a reservation for energy replenishment by the vehicle energy replenishment facility, and it is also possible to obtain the energy replenishment queuing information.

Step S1012: Determine whether queuing up for energy replenishment is needed or not based on the energy replenishment queuing information.

The queuing number of the current vehicle may be determined based on the energy replenishment queuing information. It can be determined whether queuing up for energy replenishment is needed or not based on the queuing number.

For example, if the queuing number of the current vehicle is the first, then there is no need to queue up for energy replenishment. If the queuing number of the current vehicle is the fifth, which means that four vehicles in front have not completed the energy replenishment, and thus there is a need to queue up for energy replenishment.

Step S1013: Control the vehicle to drive to the vehicle energy replenishment facility based on a determination result. Specifically, if the determination result is that there is a need to queue up for energy replenishment, the vehicle is not controlled to drive to the vehicle energy replenishment facility for the time being, but it is controlled to wait for energy replenishment; and after it is determined that there is no need to wait for energy replenishment, the vehicle is controlled to drive to the vehicle energy replenishment facility. If the determination result is that there is no need to queue up for energy replenishment, the vehicle is directly controlled to drive to the vehicle energy replenishment facility.

In some preferred implementations, when there is a need to queue up for energy replenishment, the vehicle may be first controlled to drive to a preset parking waiting area within the road service area to park to queue up for energy replenishment, and then the vehicle may be controlled to drive to the vehicle energy replenishment facility after receiving a queue number arrival notification from the vehicle energy replenishment facility. The queue number arrival notification is a message sent by the vehicle energy replenishment facility after detecting that it has been or is about to be the turn of the current vehicle to be replenished. Those skilled in the art may flexibly set the location and size of the parking waiting area within the road service area, etc., according to actual needs.

The method described above in steps S1011 to S1013 achieves autonomous driving (automated operation) of the vehicle in the whole process from queuing up for energy replenishment to driving to the vehicle energy replenishment facility for energy replenishment, and no driver takeover is needed, which significantly improves the convenience and intelligence of the vehicle energy replenishment, and thus improves the vehicle energy replenishment experience and the driving experience. In addition, in order to help the vehicle user understand the state of vehicle energy replenishment, state information of vehicle energy replenishment may also be sent to a terminal device of the vehicle user in the process of energy replenishment control over the vehicle, where the state information of vehicle energy replenishment includes, but is not limited to, queuing up for energy replenishment, being about to start energy replenishment and being in the process of energy replenishment, and the like. The terminal device of the vehicle user includes, but is not limited to, a mobile phone and a tablet PC, and the like.

In practical applications, environments of the driving road and the road service area often vary greatly. For example, for an expressway, the speed of the vehicle on the expressway is much greater than the speed of the vehicle in the road service area, and the complexity of road elements on the expressway is lower than the complexity of road elements in the road service area. In order to control autonomous driving of the vehicle on the driving road and in the road service area more reliably and safely, it is possible to obtain autonomous driving cruise modes applicable to the driving road and the road service area respectively. When the vehicle drives on the driving road, the autonomous driving cruise mode applicable to the driving road is used for autonomous driving control over the vehicle; and when the vehicle drives in the road service area, the autonomous driving cruise mode applicable to the road service area is used for autonomous driving control over the vehicle.

Specifically, in some other implementations of step S101 described above, the vehicle may be controlled to autonomously drive from the driving road to the road service area by using a preset autonomous driving cruise mode for the driving road and based on a preset navigation map of the driving road; moreover, the vehicle may be controlled to drive to the vehicle energy replenishment facility after entering the road service area by using a preset autonomous driving cruise mode for the road service area and based on a preset navigation map of the road service area.

It should be noted that the preset navigation map of the driving road and the preset navigation map of the road service area are both high-precision navigation maps. The high-precision navigation map is a map in which the precision of map elements is greater than a set value, and the high-precision navigation map is capable of providing at least lane-level navigation routes. For example, the precision of the map elements in the high-precision navigation map may be at the centimeter level, and the precision of the map elements in a non-high-precision navigation map may be at the meter level. The autonomous driving control over the vehicle based on the high-precision navigation map can significantly improve the accuracy of navigation path planning, and can also significantly improve the safety and reliability of the vehicle during driving.

The following describes a method of controlling a vehicle to drive to a vehicle energy replenishment facility within a road service area by using a preset autonomous driving cruise mode for the road service area.

In the process of controlling the vehicle to drive to the vehicle energy replenishment facility within the road service area, in addition to the conventional navigation path and autonomous driving control of the vehicle, it is necessary to determine whether or not other traffic participants coming from different directions are detected; if detected, the vehicle is controlled to yield to the other traffic participants in order to improve the safety of the vehicle in autonomous driving. The other traffic participants include, but are not limited to: vulnerable road users such as pedestrians and autocars, and other vehicles.

In addition, the road service area usually includes different types of road areas such as a rest area, a parking area, an intersection area, a turning area, and a regular passage area. In order to ensure that the vehicle can drive safely when passing through the road areas and avoid a collision or other accidents, different maximum speeds may be set according to the requirements of different types of road areas for the safety level. In the process of controlling the vehicle to drive to the vehicle energy replenishment facility, the area type of each of the road areas that the vehicle drives through is identified. The maximum speed corresponding to each of the road areas is determined according to the area type of each of the road areas, and then the vehicle is controlled to drive through each of the road areas at the maximum speed corresponding to each of the road areas, so that the vehicle speed will not be higher than the maximum speed corresponding to each of the road areas when the vehicle drives through each of the road areas. The maximum speed corresponding to the road area is in negative correlation with its safety level, that is, the higher the safety level is, the lower the maximum speed is, and the lower the safety level is, the higher the maximum speed is.

For example, the road area such as the rest area, the parking area, the intersection area and the turning area has a higher safety level, and accordingly, the maximum speed may be 15 km/h; and the regular passage area has a lower safety level, and accordingly, the maximum speed may be 20 km/h. In addition, when passing through the road area such as the intersection area and the turning area, the vehicle may also be controlled to detect information such as the state and number of obstacles in the road area, and determine, based on such information, whether to further reduce the maximum speed. For example, the maximum speed may be further reduced when there are many obstacles and they have not moved for a long time.

The above describes the method of controlling the vehicle to drive to a vehicle energy replenishment facility located in a road service area of the travel road in step S101 above.

According to step S101 above, it can be seen that by the vehicle energy replenishment control method provided in the invention, after the vehicle energy replenishment instruction is received, the vehicle may be controlled to drive to the vehicle energy replenishment facility located in the road service area of the driving road according to the vehicle energy replenishment instruction. However, in practical applications, there may be situations in which the vehicle is unable to communicate normally with the vehicle energy replenishment facility, or the vehicle energy replenishment facility is unable to work normally, etc. In this case, even if the vehicle is controlled to drive to the vehicle energy replenishment facility, energy replenishment cannot be carried out, which obviously reduces the vehicle energy replenishment experience.

In order to solve the above problems, another vehicle energy replenishment control method according to the invention may include first determining whether state information of the vehicle and state information of the vehicle energy replenishment facility meet startup conditions for vehicle energy replenishment after the vehicle energy replenishment instruction is received; if so, then controlling the vehicle to drive to the vehicle energy replenishment facility located in the road service area of the driving road; if not, then controlling the vehicle to continue autonomously driving to the navigation destination on the driving road rather than controlling the vehicle to drive to the vehicle energy replenishment facility located in the road service area of the driving road.

The state information of the vehicle includes at least whether the vehicle has downloaded the navigation map for the road service area to which the vehicle is driving, whether the network communication function of the vehicle is normal, whether the positioning function of the vehicle is normal, the location of the vehicle, whether the software and hardware of the vehicle run normally, and the like.

The state information of the vehicle energy replenishment facility includes at least whether the vehicle energy replenishment facility enables an energy replenishment service that allows the use of the vehicle energy replenishment facility for energy replenishment, whether the network communication function of the vehicle energy replenishment facility is normal, whether the software and hardware of the vehicle energy replenishment facility run normally, and the like.

In this embodiment, the startup conditions for vehicle energy replenishment control may include startup conditions that the vehicle needs to meet and the startup conditions that the vehicle energy replenishment facility needs to meet.

The startup conditions that the vehicle needs to meet include, but are not limited to: the vehicle has downloaded the navigation map for the road service area; the positioning function of the vehicle is normal, and the software and hardware of the vehicle run normally; and the location of the vehicle is within a preset area that allows the startup of vehicle energy replenishment control.

The startup conditions that the vehicle energy replenishment facility need to meet includes, but are not limited to: the vehicle energy replenishment facility activates a reservation service for energy replenishment by the vehicle energy replenishment facility; and the network communication function of the vehicle energy replenishment facility is normal, and the software and hardware of the vehicle energy replacement facility run normally.

According to an embodiment of the invention, in addition to activating a vehicle energy replenishment control function in accordance with the method described above, the vehicle energy replenishment control method may further include, after the vehicle energy replenishment control function is activated, stopping the energy replenishment control over the vehicle and controlling the vehicle to continue autonomously driving on the driving road to the navigation destination in response to a received energy replenishment stop instruction, i.e., deactivating the vehicle energy replenishment control function. The vehicle energy replenishment stop instruction is an instruction entered by a user through a human-computer interaction device of the vehicle or an instruction generated after an abnormality in the state information of the vehicle is detected. In other words, the vehicle user may deactivate the vehicle energy replenishment control function at any time through the human-computer interaction device, and the vehicle may also automatically deactivate the vehicle energy replenishment control function after detecting the abnormality of the state information. For example, the vehicle energy replenishment control function may be automatically deactivated when the positioning function of the vehicle is abnormal, or when the software of the vehicle runs abnormally, or when the hardware of the vehicle runs abnormally.

Further, after the vehicle energy replenishment control function is deactivated, if the vehicle is on a navigation path towards or away from the road service area and the state information of the vehicle and the state information of the vehicle energy replenishment facility meet the startup conditions for vehicle energy replenishment, the vehicle energy replenishment control may also be restored, i.e., the vehicle energy replenishment control function may be re-activated.

Specifically, after stopping the energy replenishment control over the vehicle, the method may further include, detecting, in response to a received energy replenishment restore instruction, whether the state information of the vehicle and the state information of the vehicle energy replenishment facility meet the startup conditions for vehicle energy replenishment and whether the vehicle is on a navigation path towards or away from the road service area; restoring the energy replenishment control over the vehicle if the startup conditions are met and the vehicle is on the navigation path towards or away from the road service area, i.e., re-activating the vehicle energy replenishment control function; otherwise, still stopping the energy replenishment control over the vehicle and controlling the vehicle to continue autonomously driving on the driving road to the navigation destination, i.e., continuing to deactivate the vehicle energy replenishment control function.

In order to facilitate the restore of the energy replenishment control over the vehicle, a restore button may be provided on the vehicle. If the vehicle user triggers the restore button before the vehicle is on the navigation path towards or away from the road service area and the state information of the vehicle and the state information of the vehicle energy replenishment facility meet the startup conditions for energy replenishment, the energy replenishment control over the vehicle may be re-activated immediately, so as to achieve the technical effect of one-button restore. In this embodiment, the original software button or hardware button on the vehicle may be reused as the restore button to simplify the vehicle control mode. For example, a startup button of the autonomous driving function of the vehicle may be reused as the restore button.

It should be noted that, although the steps are described in a particular sequence in the above embodiments, those skilled in the art may understand that, to implement the effects of the invention, different steps are not necessarily performed in such a sequence, and the steps may be performed simultaneously (in parallel) or in another sequence. These changes fall within the scope of protection of the invention.

The following is a brief description of the overall flow of the vehicle energy replenishment control method provided in the invention in conjunction with FIG. 3, by taking the driving road being the expressway and the vehicle energy replenishment facility being the vehicle battery swap station in the service area as an example.

As shown in FIG. 3, the vehicle receives a vehicle energy replenishment instruction at a certain moment while driving on the expressway, the vehicle is controlled to plan a navigation path from the current location (where the vehicle energy replenishment instruction is received) to the road service area, and then the vehicle is controlled to drive to the vicinity of the road service area in accordance with the navigation path and enter the road service area from ramp 1 shown in FIG. 3.

After entering the road service area, the vehicle is controlled to send a query request for energy replenishment queuing information to the vehicle battery swap station within the road service area to obtain the energy replenishment queuing information of the vehicle battery swap station.

If it is determined that there is a need to queue up for energy replenishment based on the energy replenishment queuing information, a navigation path is planned with a parking waiting area as a destination, and the vehicle is controlled to drive to the parking waiting area in accordance with the navigation path to autonomously park to queue up for energy replenishment. Meanwhile, in the process of queuing up for energy replenishment, if a queue number arrival notification sent by the vehicle battery swap station is received, a navigation path is planned again with the vehicle battery swap station as a destination, and the vehicle drives to the vehicle battery swap station in accordance with the navigation path to carry out a battery swap, returns to the expressway from ramp 2 shown in FIG. 3 after the battery swap is finished, and then continues to drive to the original navigation destination.

If it is determined that there is no need to queue up for energy replenishment based on the energy replenishment queuing information, a navigation path is planned with the vehicle battery swap station as a destination, and the vehicle drives to the vehicle battery swap station in accordance with the navigation path to carry out a battery swap, returns to the expressway from ramp 2 shown in FIG. 3 after the battery swap is finished, and then continues to drive to the original navigation destination.

Those skilled in the art may understand that all or some of the procedures in the methods in the above embodiments of the invention may be implemented by using a computer program instructing related hardware. The computer program may be stored in a computer-readable storage medium. When the computer program is executed by a processor, the steps in the above method embodiments may be implemented. The computer program includes computer program code, and the computer program code may be in the form of source code, target code, and an executable file, or in some intermediate forms, etc. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the invention further provides a computer device.

In an embodiment of the computer device according to the invention, the computer device includes at least one processor and a storage apparatus. The storage apparatus may be configured to store a program that causes the vehicle energy replenishment control method in the foregoing method embodiment to be carried out, and the processor may be configured to execute a program in the storage apparatus. The program includes, but is not limited to, the program that causes the vehicle energy replenishment control method in the foregoing method embodiment to be carried out. For ease of description, only parts related to the embodiments of the invention are shown. For specific technical details that are not disclosed, refer to the method part of the embodiments of the invention. The computer device may be a control device formed by various electronic devices.

Furthermore, the invention further provides a computer-readable storage medium.

In an embodiment of the computer-readable storage medium according to the invention, the computer-readable storage medium may be configured to store a program for performing the vehicle energy replenishment control method in the above method embodiments, and the program may be loaded and executed by at least one processor to implement the vehicle energy replenishment control method described above. For ease of description, only parts related to the embodiments of the invention are shown. For specific technical details that are not disclosed, refer to the method part of the embodiments of the invention. The computer-readable storage medium may be a storage apparatus device formed by various electronic devices. Optionally, the computer-readable storage medium in this embodiment of the invention is a non-transitory computer-readable storage medium.

Further, the invention further provides a vehicle. In an embodiment of the vehicle according to the invention, the vehicle may include the computer device described in the above embodiment of the computer device. In this embodiment, the vehicle may be an autonomous vehicle, a driverless vehicle, or the like. In addition, according to types of power sources, the vehicle in this embodiment can be a fuel vehicle, an electric vehicle, a hybrid vehicle in which electric energy is mixed with fuel, or a vehicle using other new energy sources.

Heretofore, the technical solutions of the invention have been described with reference to an implementation shown in the accompanying drawings. However, it would have been readily understood by those skilled in the art that the scope of protection of the invention is obviously not limited to these specific implementations. Without departing from the principles of the invention, those skilled in the art may make equivalent changes or replacements to related technical features. The technical solutions obtained after these changes or replacements fall within the scope of protection of the invention.

## Claims

1. A vehicle energy replenishment control method, comprising:
in the process of controlling a vehicle to autonomously drive to a navigation destination on a driving road, in response to a received vehicle energy replenishment instruction, controlling the vehicle to drive to a vehicle energy replenishment facility located in a road service area of the driving road;
controlling the vehicle to send an energy replenishment request to the vehicle energy replenishment facility to enable the vehicle energy replenishment facility to automatically replenish energy to the vehicle based on the energy replenishment request; and
controlling the vehicle, after completing energy replenishment, to return to the driving road and continue autonomously driving towards the navigation destination.

2. The vehicle energy replenishment control method according to claim 1, wherein the step of "controlling the vehicle to drive to a vehicle energy replenishment facility located in a road service area of the driving road" specifically comprises:
controlling the vehicle to drive to the road service area and sending a query request for energy replenishment queuing information to the vehicle energy replenishment facility to obtain the energy replenishment queuing information of the vehicle energy replenishment facility;
determining whether queuing up for energy replenishment is needed or not based on the energy replenishment queuing information;
controlling the vehicle to drive to the vehicle energy replenishment facility based on a determination result;
the driving road being an expressway, and the vehicle energy replenishment facility comprising a vehicle battery swap station.

3. The vehicle energy replenishment control method according to claim 2, wherein the step of "controlling the vehicle to drive to the vehicle energy replenishment facility based on a determination result" specifically comprises:
if there is no need to queue up for energy replenishment, directly controlling the vehicle to drive to the vehicle energy replenishment facility; and
if there is a need to queue up for energy replenishment, controlling the vehicle to drive to a preset parking waiting area within the road service area to park to queue up for energy replenishment, and then controlling the vehicle to drive to the vehicle energy replenishment facility after a queue number arrival notification from the vehicle energy replenishment facility is received.

4. The vehicle energy replenishment control method according to claim 1, wherein the step of "controlling the vehicle to drive to a vehicle energy replenishment facility located in a road service area of the driving road" further comprises:
controlling the vehicle to drive to the road service area by using a preset autonomous driving cruise mode for the driving road and based on a preset navigation map of the driving road; and
controlling the vehicle, after entering the road service area, to drive to the vehicle energy replenishment facility by using a preset autonomous driving cruise mode for the road service area and based on a preset navigation map of the road service area.

5. The vehicle energy replenishment control method according to claim 4, wherein the step of "controlling the vehicle, after entering the road service area, to drive to the vehicle energy replenishment facility by using a preset autonomous driving cruise mode for the road service area and based on a preset navigation map of the road service area" specifically comprises:
determining whether other traffic participants coming from different directions are detected in the process of controlling the vehicle to drive to the vehicle energy replenishment facility; if detected, then controlling the vehicle to yield to the other traffic participants;
and/or
identifying the area type of each of road areas through which the vehicle drives in the process of controlling the vehicle to drive to the vehicle energy replenishment facility;
determining a maximum speed corresponding to each of the road areas respectively based on the area type of each of the road areas; and
controlling the vehicle to drive through each of the road areas based on the maximum speed corresponding to each of the road areas.

6. The vehicle energy replenishment control method according to claim 1, wherein before the step of "controlling the vehicle to drive to a vehicle energy replenishment facility located in a road service area of the driving road", the method further comprises:
detecting whether state information of the vehicle and state information of the vehicle energy replenishment facility meet startup conditions for vehicle energy replenishment;
if so, then continuing to perform the step of "controlling the vehicle to drive to a vehicle energy replenishment facility located in a road service area of the driving road";
if not, then stopping performing the step of "controlling the vehicle to drive to a vehicle energy replenishment facility located in a road service area of the driving road", and controlling the vehicle to continue autonomously driving towards the navigation destination on the driving road;
and/or
the method further comprises:
in the process of performing energy replenishment control over the vehicle, in response to a received energy replenishment stop instruction, stopping the energy replenishment control over the vehicle and controlling the vehicle to continue autonomously driving towards the navigation destination on the driving road;
wherein the vehicle energy replenishment stop instruction is an instruction entered by a user through a human-computer interaction device of the vehicle or an instruction generated after an abnormality in the state information of the vehicle is detected.

7. The vehicle energy replenishment control method according to claim 6, wherein after the step of "stopping the energy replenishment control over the vehicle and controlling the vehicle to continue autonomously driving towards the navigation destination on the driving road", the method further comprises:
detecting, in response to a received energy replenishment restore instruction, whether the state information of the vehicle and the state information of the vehicle energy replenishment facility meet the startup conditions for vehicle energy replenishment and whether the vehicle is on a navigation path towards or from the road service area;
restoring the energy replenishment control over the vehicle if the startup conditions are met and the vehicle is on the navigation path towards or away from the road service area;
otherwise, still stopping the energy replenishment control over the vehicle and controlling the vehicle to continue autonomously driving towards the navigation destination on the driving road.

8. A computer device, comprising at least one processor and a storage apparatus configured to store a plurality of program codes, wherein the program codes are adapted to be loaded and executed by the at least one processor to perform a vehicle energy replenishment control method according to any one of claims 1 to 7.

9. A computer-readable storage medium storing a plurality of program codes, wherein the program codes are adapted to be loaded and executed by at least one processor to perform a vehicle energy replenishment control method according to any one of claims 1 to 7.

10. A vehicle, comprising a vehicle energy replenishment method according to claim 8.
